# EUROPEAN PATENT APPLICATION

(11) **EP 4 521 091 A1**
(43) Date of publication of application: **12.03.2025**
(21) Application number: 24199862.4
(22) Date of filing: 11.09.2024
(51) Int. Cl.: G01M 15/14, F16C 32/06

(54) **AEROMECHANICAL DAMPING MEASUREMENT SYSTEM FOR A GAS TURBINE ENGINE**

(30) Priority: 11.09.2023 US 202363537677 P
(71) Applicant: RTX Corporation, Farmington, CT 06032 (US); University of Central Florida Research Foundation, Inc., Orlando, FL 32826 (US)
(72) Inventor: GIANNUZZI, Sydney, Orlando, 32826 (US); McCORNICK, Duane C., Colchester, 06415 (US); JONSSON, Ulf J., South Windsor, 06074 (US); ILAK, Milos, Hoboken, 07030 (US); KAUFFMAN, Jeffrey, Orlando, 32826 (US)
(74) Representative: Dehns

(57) **Abstract**

A gas injection nozzle (64) includes a nozzle housing (78), a pintle (80), and a piezoelectric actuator (84). The nozzle housing (78) extends along an axis (88). The nozzle housing (78) includes an inner wall (124), an outer wall (105), and an axial endwall (106). The inner wall (124) and the outer wall (105) form an outer cavity (130) radially between the inner wall (124) and the outer wall (105). The inner wall (124) forms an inner cavity (132) radially within the inner wall (124). The nozzle housing (78) further forms a nozzle outlet passage (104) through the axial endwall (106) along the axis (88). The nozzle outlet passage (104) is connected in fluid communication with the outer cavity (130) by a gap (162) at the first axial endwall (106). The pintle (80) extends along the axis (88) within the inner cavity (132) and further forms the gap (162). The pintle (80) is axially movable to vary a size of the gap (162). The piezoelectric actuator (84) is coupled with the pintle (80) and configured to move the pintle (80).

## Description

### BACKGROUND

### 1. Technical Field

This disclosure relates generally to aeromechanical damping measurement systems for gas turbine engines and, more particularly, to gas injection nozzles for aeromechanical damping measurement systems.

### 2. Background Information

A turbomachine, such as a gas turbine engine, typically includes rotating equipment (e.g., an airfoil for a fan rotor) configured to direct and/or compress air or other gas for operation of the turbomachine. Under some conditions, rotational equipment may experience vibrational instability (e.g., "flutter") in response to aerodynamic forces experienced by the rotational equipment. Various systems and methods are known in the art for measuring aeromechanical damping characteristics of rotational equipment under varying aerodynamic conditions to identify flutter susceptibility. While these known systems and methods may be suitable for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, a gas injection nozzle for an aeromechanical damping measurement system includes a nozzle housing, a pintle, and a piezoelectric actuator. The nozzle housing extends along an axis. The nozzle housing includes an inner wall, an outer wall, and a first axial endwall. The inner wall and the outer wall extend circumferentially about the axis. The inner wall and the outer wall form an outer cavity radially between the inner wall and the outer wall. The inner wall forms an inner cavity radially within the inner wall. The nozzle housing further forms a nozzle outlet passage through the first axial endwall along the axis. The nozzle outlet passage is connected in fluid communication with the outer cavity by a gas flow control gap at the first axial endwall. The pintle extends along the axis within the inner cavity. The pintle further forms the gas flow control gap. The pintle is axially movable between a first position and a second position to vary a size of the gas flow control gap. The piezoelectric actuator is coupled with the pintle. The piezoelectric actuator is configured to move the pintle between the first position and the second position.

In any of the aspects or examples described above and herein, the piezoelectric actuator may be configured to move the pintle between the first position and the second position at a frequency greater than 500 hertz.

In any of the aspects or examples described above and herein, the inner wall may circumscribe and be radially spaced from the pintle. The outer wall may circumscribe and be radially spaced from the inner wall.

In any of the aspects or examples described above and herein, the gas injection nozzle may further include a flexure disk disposed between and contacting the pintle and the piezoelectric actuator. The flexure disk may further form the inner cavity.

In any of the aspects or examples described above and herein, the flexure disk may be imperforate.

In any of the aspects or examples described above and herein, the flexure disk may form a plurality of apertures extending through the flexure disk.

In any of the aspects or examples described above and herein, the gas injection nozzle may further include a flexure disk disposed between and contacting the pintle and the piezoelectric actuator. The nozzle housing may further include a barrier wall axially between the first axial endwall and the flexure disk. The barrier wall may be configured with a slip fit around a shaft of the pintle.

In any of the aspects or examples described above and herein, the barrier wall may isolate the flexure disk from fluid communication with the inner cavity.

In any of the aspects or examples described above and herein, the barrier wall may extend between and to the inner wall and the pintle.

In any of the aspects or examples described above and herein, the barrier wall may form a disk cavity axially between the barrier wall and the flexure disk. The disk cavity may be vented to an exterior of the gas injection nozzle.

In any of the aspects or examples described above and herein, the nozzle housing may further include a second axial endwall forming the outer cavity opposite the first axial endwall. The nozzle housing may form an inlet cavity. The second axial endwall may form a plurality of apertures connecting the outer cavity and the inlet cavity in fluid communication.

In any of the aspects or examples described above and herein, the inner cavity may be connected in fluid communication with the outer cavity by a gap formed between the pintle and the inner wall.

According to another aspect of the present disclosure, an aeromechanical damping measurement system includes a gas injection nozzle, a gas source, and a controller. The gas injection nozzle includes a nozzle housing, a pintle, and a piezoelectric actuator. The nozzle housing extends along an axis. The nozzle housing includes an inner wall and an outer wall. The inner wall and the outer wall extend circumferentially about the axis. The inner wall and the outer wall form an outer cavity. The inner wall forms an inner cavity radially within the inner wall. The nozzle housing further forms a nozzle outlet passage. The nozzle outlet passage is connected in fluid communication with the outer cavity by a gas flow control gap. The pintle is disposed within the inner cavity. The pintle further forms the gas flow control gap. The pintle is axially movable between a first position and a second position to vary a size of the gas flow control gap. The piezoelectric actuator is coupled with the pintle. The piezoelectric actuator is configured to move the pintle between the first position and the second position. The gas source connected in fluid communication with the outer cavity. The gas source is configured to direct a pressurized gas into the outer cavity. The controller is electrically connected to the piezoelectric actuator. The controller is configured to direct a control current to the piezoelectric actuator to control the piezoelectric actuator to position the pintle in the first position or the second position.

In any of the aspects or examples described above and herein, the inner cavity may be connected in fluid communication with the outer cavity by a gap formed between the pintle and the inner wall.

In any of the aspects or examples described above and herein, the gas source may be connected in fluid communication with the inner cavity by a pressure regulator. The pressure regulator may be configured to pressurize the inner cavity at a reduced pressure relative to the outer cavity.

In any of the aspects or examples described above and herein, the controller may include a processor connected in signal communication with a non-transitory memory storing instructions which, when executed by the processor, may cause the controller to control the control current directed to the piezoelectric actuator to move the pintle between the first position and the second position at a frequency greater than 500 hertz.

In any of the aspects or examples described above and herein, the aeromechanical damping measurement system may include at least one position sensor connected in signal communication with the controller. The controller may include a processor connected in signal communication with a non-transitory memory storing instructions which, when executed by the processor, may cause the controller to control the control current directed to the piezoelectric actuator to move the pintle to control the size of the gas flow control gap and direct a pressurized gas stream into a component and measure a vibration of the component in response to the pressurized gas stream with the at least one position sensor.

In any of the aspects or examples described above and herein, controlling the control current directed to the piezoelectric actuator to move the pintle to control the size of the gas flow control gap may include controlling the control current directed to the piezoelectric actuator to move the pintle between the first position and the second position at a frequency greater than 500 hertz.

In any of the aspects or examples described above and herein, the gas injection nozzle may further include a flexure disk disposed between and contacting the pintle and the piezoelectric actuator. The flexure disk may further form the inner cavity.

In any of the aspects or examples described above and herein, the gas injection nozzle may further include a flexure disk disposed between and contacting the pintle and the piezoelectric actuator. The nozzle housing may further include a barrier wall axially between the first axial end wall and the flexure disk. The barrier wall may isolate the flexure disk from fluid communication with the inner cavity. The flexure disk may form a plurality of apertures extending through the flexure disk.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 schematically illustrates a cutaway, side view of a gas turbine engine for an aircraft propulsion system, in accordance with one or more embodiments of the present disclosure.
FIG. 2 schematically illustrates an aeromechanical damping measurement system, in accordance with one or more embodiments of the present disclosure.
FIG. 3 schematically illustrates a cutaway, front view of a fan section of the gas turbine engine including components of the aeromechanical damping measurement system, in accordance with one or more embodiments of the present disclosure.
FIG. 4 illustrates a cutaway, side view of a gas injection nozzle for an aeromechanical damping measurement system, in accordance with one or more embodiments of the present disclosure.
FIG. 5 illustrates a cutaway, side view of another gas injection nozzle for an aeromechanical damping measurement system, in accordance with one or more embodiments of the present disclosure.
FIG. 6 illustrates a cutaway, side view of another gas injection nozzle for an aeromechanical damping measurement system, in accordance with one or more embodiments of the present disclosure.
FIG. 7 illustrates a cutaway, side view of another gas injection nozzle for an aeromechanical damping measurement system, in accordance with one or more embodiments of the present disclosure.
FIG. 8 illustrates a cutaway, side view of another gas injection nozzle for an aeromechanical damping measurement system, in accordance with one or more embodiments of the present disclosure.

### DETAILED DESCRIPTION

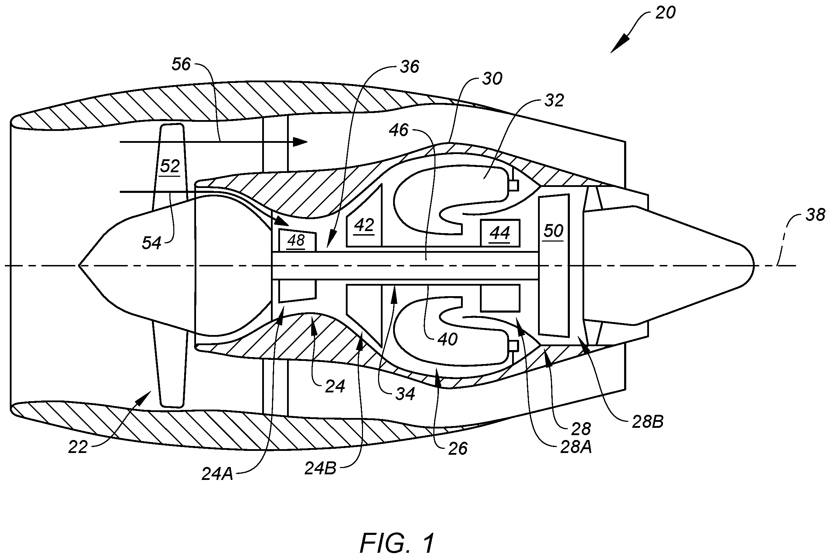

FIG. 1 schematically illustrates a gas turbine engine 20. The gas turbine engine 20 of FIG. 1 is a multi-spool turbofan gas turbine engine for an aircraft propulsion system. However, while the following description and accompanying drawings may refer to the turbofan gas turbine engine of FIG. 1 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine.

The gas turbine engine 20 of FIG. 1 includes a fan section 22, a compressor section 24, a combustor section 26, a turbine section 28, and an engine static structure 30. The compressor section 24 of FIG. 1 includes a low-pressure compressor (LPC) 24A and a high-pressure compressor (HPC) 24B. The combustor section 26 includes a combustor 32 (e.g., an annular combustor). The turbine section 28 includes a high-pressure turbine (HPT) 28A and a low-pressure turbine (LPT) 28B.

Components of the fan section 22, the compressor section 24, and the turbine section 28 form a first rotational assembly 34 (e.g., a high-pressure spool) and a second rotational assembly 36 (e.g., a low-pressure spool) of the gas turbine engine 20. The first rotational assembly 34 and the second rotational assembly 36 are mounted for rotation about a rotational axis 38 (e.g., an axial centerline) of the gas turbine engine 20 relative to the engine static structure 30.

The first rotational assembly 34 includes a first shaft 40, a bladed first compressor rotor 42 for the high-pressure compressor 24B, and a bladed first turbine rotor 44 for the high-pressure turbine 28A. The first shaft 40 interconnects the bladed first compressor rotor 42 and the bladed first turbine rotor 44.

The second rotational assembly 36 includes a second shaft 46, a bladed second compressor rotor 48 for the low-pressure compressor 24A, and a bladed second turbine rotor 50 for the low-pressure turbine 28B. The second shaft 46 interconnects the bladed second compressor rotor 48 and the bladed second turbine rotor 50. The second shaft 46 may additionally be directly or indirectly coupled to a bladed fan rotor 52 for the fan section 22. For example, the second shaft 46 may be coupled to the bladed fan rotor 52 (e.g., an input shaft of the bladed fan rotor 52) by a reduction gear assembly configured to drive the bladed fan rotor 52 at a reduced rotational speed relative to the second shaft 46. The first shaft 40 and the second shaft 46 are concentric and configured to rotate about the rotational axis 38. The present disclosure, however, is not limited to concentric configurations of the first shaft 40 and the second shaft 46.

The engine static structure 30 may include one or more engine cases, cowlings, bearing assemblies, and/or other non-rotating structures configured to house and/or support (e.g., rotationally support) components of the gas turbine engine 20 sections 22, 24, 26, 28. The engine static structure 30 may form an exterior (e.g., an outer radial portion) of the gas turbine engine 20.

In operation of the gas turbine engine 20 of FIG. 1, ambient air is directed through the fan section 22 and into a core flow path 54 (e.g., an annular flow path) and a bypass flow path 56 (e.g., an annular flow path) by rotation of the bladed fan rotor 52. Airflow along the core flow path 54 is compressed by the low-pressure compressor 24A and the high-pressure compressor 24B, mixed and burned with fuel in the combustor 32, and then directed through the high-pressure turbine 28A and the low-pressure turbine 28B. The bladed first turbine rotor 44 and the bladed second turbine rotor 50 rotationally drive the first rotational assembly 34 and the second rotational assembly 36, respectively, in response to the combustion gas flow through the high-pressure turbine 28A and the low-pressure turbine 28B. The bypass flow path 56 may be disposed outside the engine static structure 30. For example, the engine static structure 30 and an outer aircraft propulsion system housing (e.g., a nacelle) may form an annular bypass duct radially therebetween, and airflow may be directed through the annular bypass duct along the bypass flow path 56.

During operation, components of the gas turbine engine 20 such as, but not limited to, the bladed fan rotor, may experience a phenomenon known as "flutter." Flutter may be experienced by flexible structures, such as airfoils (e.g., fan blades), subjected to aerodynamic forces. In particular, flutter may be associated with motion dependent forces experienced by a component as the component moves within a flow field and the motion of the component modifies the aerodynamic forces on the component. In some cases, a vibration mode experienced by a component undergoing flutter conditions may contribute to degradation and/or failure of the component. Measurement and identification of the aeromechanical damping characteristics of a component (e.g., in operation with the gas turbine engine 20) may facilitate improved component design and operational criteria to prevent or minimize the occurrence and/or impact of flutter on the component.

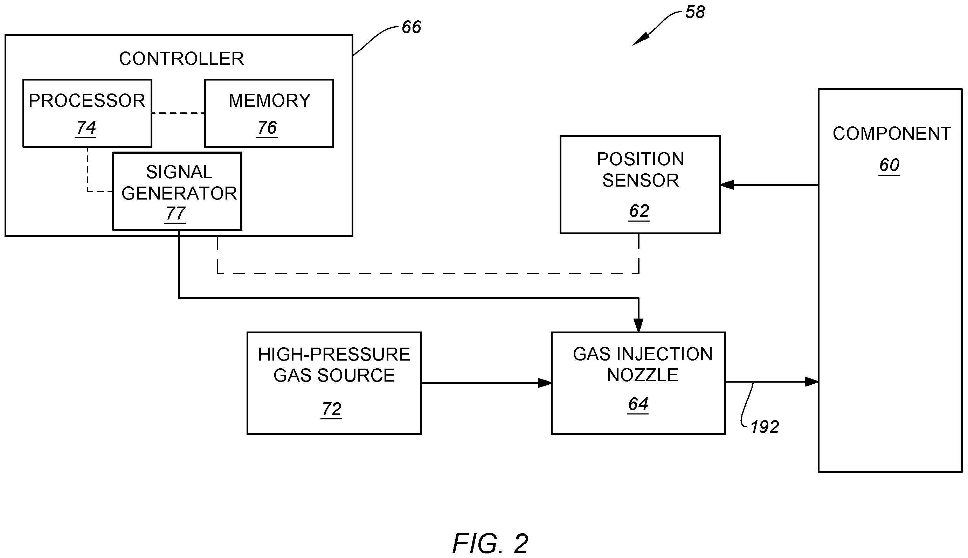

FIG. 2 schematically illustrates an aeromechanical damping measurement system 58. The aeromechanical damping measurement system 58 is configured for measuring aeromechanical damping characteristics of a component 60. While the aeromechanical damping measurement system 58 is described herein for the measurement of damping characteristics of gas turbine engine components (e.g., fan blades), the aeromechanical damping measurement system 58 is not limited to use with any type, configuration, material, shape, size, application, etc. of the component 60. The aeromechanical damping measurement system 58 of FIG. 2 includes at least one position sensor 62, at least one gas injection nozzle 64, and a controller 66.

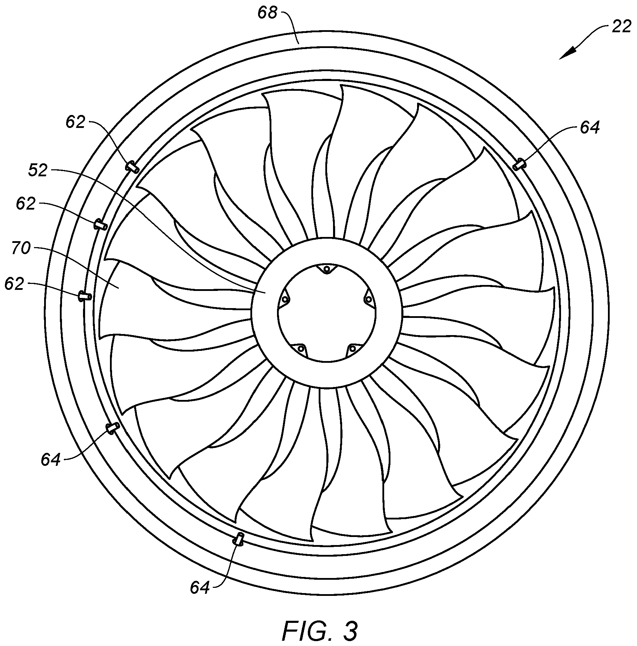

Briefly, FIG. 3 illustrates an exemplary arrangement of the aeromechanical damping measurement system 58 installed in the fan section 22 (see FIG. 1). The aeromechanical damping measurement system 58 of FIG. 3 includes the position sensor(s) 62 and the gas injection nozzle(s) 64 mounted on a fan case 68 circumscribing the bladed fan rotor 52. For example, the position sensor(s) 62 and the gas injection nozzle(s) 64 of FIG. 3 are mounted on the fan case 68 in proximity to a plurality of fan blades 70 (e.g., fan blade tips) of the bladed fan rotor 52.

The position sensor 62 is a non-contact sensor configured to measure a position of the component 60. In particular, the position sensor 62 is configured to a change in position (e.g., vibration or other deflection) of the component 60 in response to inducement of component 60 deflection by the gas injection nozzle(s) 64. The position sensor 62 may be configured as a position sensor such as, but not limited to, a capacitance sensor, a proximity sensor, a magnetic sensor, an optical sensor, or the like. The position sensor 62 may be a sensor of a blade tip timing and/or a blade tip clearance measurement system of the gas turbine engine 20, however, the present disclosure is not limited to use of the position sensor 62 with any other measurement system.

The gas injection nozzle 64 is configured to direct a pressurized gas stream toward and onto the component 60 to induce a deflection of the component 60. The gas injection nozzle 64 is connected in fluid communication with a high-pressure gas source 72. The gas source 72 is configured to store and/or pressurize a gas such as air or another gas for use by the gas injection nozzle 64.

The controller 66 is connected in communication (e.g., electrical and/or signal communication) with at least some of the components of the aeromechanical damping measurement system 58 such as, but not limited to, the position sensor 62 and the gas injection nozzle 64, to control and/or receive signals therefrom to perform the functions described herein. The controller 66 includes a processor 74 and memory 76 connected in signal communication with the processor 74. The processor 74 may include any type of computing device, computational circuit, processor(s), CPU, computer, or the like capable of executing a series of instructions that are stored in memory 76. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the aeromechanical damping measurement system 58 to accomplish the same algorithmically and/or coordination of aeromechanical damping measurement system 58 components. The memory 76 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 66. The controller 66 may include, or may be in communication with, an input device that enables a user to enter data and/or instructions, and may include, or be in communication with, an output device configured, for example to display information (e.g., a visual display or a printer), or to transfer data, etc. Communications between the controller 66 and other components of the aeromechanical damping measurement system 58 may be via a hardwire connection or via a wireless connection. A person of skill in the art will recognize that portions of the controller 66 may assume various forms (e.g., digital signal processor, analog device, etc.) capable of performing the functions described herein.

The controller 66 may further include or be connected in signal communication with a signal generator 77. The signal generator 77 is electrically connected to the gas injection nozzle 64, as will be discussed below in further detail. The signal generator 77 is configured to generate a high-frequency alternating current (AC) signal (e.g., a sinusoidal driving signal) to facilitate operation of the gas injection nozzle 64 to generate bursts of pressurized gas streams (e.g., an oscillating, pressurized gas stream) toward and onto the component 60 to induce a deflection of the component 60. The signal generator 77 may be configured to generate the high-frequency AC signal at an operating frequency above (e.g., well above) 500 hertz (Hz, for example, greater than one kilohertz (1 kHz) or up to or even greater than two kilohertz (2 kHz).

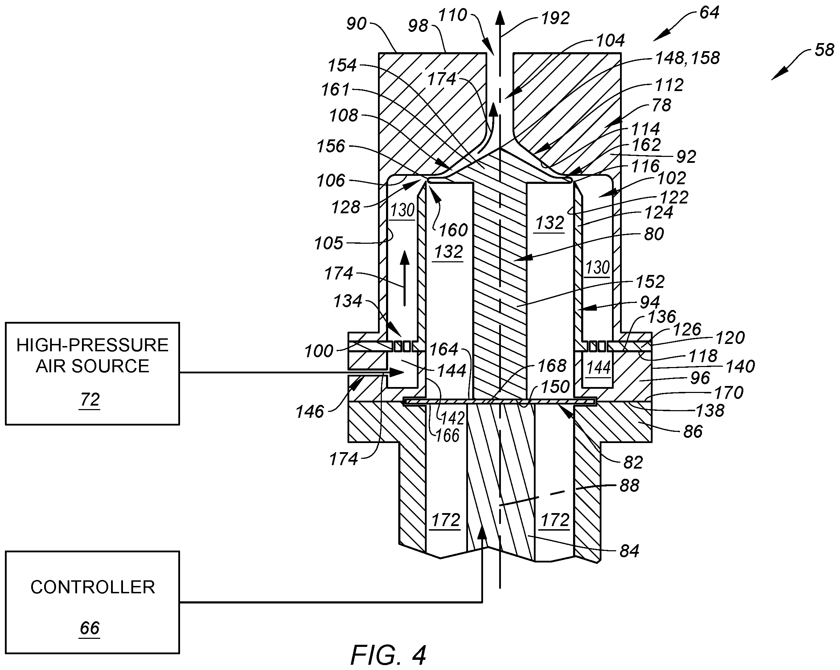

FIG. 4 illustrates a cutaway, side view of the gas injection nozzle 64. The gas injection nozzle 64 of FIG. 4 includes a nozzle housing 78, a pintle 80, a flexure disk 82, a piezoelectric actuator 84, and an actuator housing 86. The gas injection nozzle 64 extends along an axial centerline 88 of the gas injection nozzle 64 from a distal end 90 of the gas injection nozzle 64.

The nozzle housing 78 forms an exterior housing of the gas injection nozzle 64. The nozzle housing 78 of FIG. 4 includes a nozzle body 92, an intermediate wall body 94, and an inlet body 96. The nozzle body 92, the intermediate wall body 94, and the inlet body 96 are illustrated in FIG. 4 as discrete bodies assembled together to form the nozzle housing 78. The nozzle body 92, the intermediate wall body 94, and/or the inlet body 96 may alternatively form a unitary component. The term "unitary component" as used herein means a single component, wherein combinations of the nozzle body 92, the intermediate wall body 94, and/or the inlet body 96 are an inseparable body (e.g., formed of a single material) forming the nozzle housing 78.

The nozzle body 92 extends circumferentially about (e.g., completely around) the axial centerline 88. The nozzle body 92 extends (e.g., axially extends) between and to a first axial end 98 of the nozzle body 92 and a second axial end 100 of the nozzle body 92. The first axial end 98 forms the distal end 90. The nozzle body 92 forms and circumscribes a nozzle cavity 102 and a nozzle outlet passage 104. For example, the nozzle body 92 forms an outer wall 105 extending circumferentially about (e.g., completely around) and forming the nozzle outlet passage 104. The nozzle cavity 102 extends along the axial centerline 88 between and to the second axial end 100 and an endwall 106 (e.g., a pintle seating surface) formed by the nozzle body 92. The endwall 106 is radially or substantially radially and facing the second axial end 100. The endwall 106 extends circumferentially about (e.g., completely around) the axial centerline 88. The nozzle cavity 102 may be formed, for example, by a portion of the nozzle body 92 having a substantially cylindrical and tubular configuration and extending (e.g., axially extending) between and to the second axial end 100 and the endwall 106. The nozzle outlet passage 104 extends along the axial centerline 88 between and to the nozzle cavity 102 and the first axial end 98. In particular, the nozzle outlet passage 104 extends along the axial centerline 88 between and to a passage inlet 108 (e.g., at the nozzle cavity 102) and a passage outlet 110 (e.g., at the first axial end 98). The passage inlet 108 is disposed at (e.g., on, adjacent, or proximate) and circumscribed by the endwall 106. The nozzle cavity 102 has a greater diameter (e.g., a significantly greater diameter) than the nozzle outlet passage 104. The nozzle outlet passage 104 may have a converging throat segment 112 at (e.g., on, adjacent, or proximate) the passage inlet 108. The converging throat segment 112 has a diameter which converges from a diameter of the passage inlet 108 to or toward a diameter of the passage outlet 110 in an axial direction from the passage inlet 108 toward the passage outlet 110. For example, the converging throat segment 112 may be formed by a conical surface 114 of the nozzle body 92 extending circumferentially about (e.g., completely around) the axial centerline 88 at (e.g., on, adjacent, or proximate) the passage inlet 108.

The intermediate wall body 94 extends (e.g., axially extends) between and to a first axial end 116 of the intermediate wall body 94 and a second axial end 118 of the intermediate wall body 94. The intermediate wall body 94 extends (e.g., radially extends) between and to an outer radial end 120 of the intermediate wall body 94 and an inner radial end 122 of the intermediate wall body 94. The intermediate wall body 94 forms an inner wall 124 and an endwall 126 disposed within the nozzle cavity 102. The inner wall 124 and the endwall 126 extend circumferentially about (e.g., completely around) the axial centerline 88.

The inner wall 124 extends (e.g., axially extends) along the inner radial end 122 between and to the first axial end 116 and the second axial end 118. The inner wall 124 may form a substantially cylindrical and tubular portion of the intermediate wall body 94 between the first axial end 116 and the second axial end 118. The inner wall 124, on the first axial end 116, is axially spaced from the endwall 106 by an axial gap 128. The inner wall 124 is disposed radially between the nozzle body 92 and the pintle 80. The inner wall 124 forms and subdivided the nozzle cavity 102 into an outer cavity 130 (e.g., an outer-radial cavity) and an inner cavity 132 (e.g., an inner-radial cavity). The outer cavity 130 is an annular cavity extending circumferentially about (e.g., completely around) the axial centerline 88 between (e.g., radially between) the nozzle body 92 and the inner wall 124. The outer cavity 130 extends axially between and to the endwall 126 and the endwall 106. The inner cavity 132 is formed by and within (e.g., radially within) the inner wall 124.

The endwall 126 extends (e.g., radially extends) along the second axial end 118 between and to the inner radial end 122 (e.g., at the inner wall 124) and the outer radial end 120. The endwall 126 may be mounted to or otherwise disposed at (e.g., on, adjacent, or proximate) the second axial end 100. The endwall 126 further forms the outer cavity 130. The endwall 126 forms a plurality of gas apertures 134 extending through (e.g., axially through) the endwall 126 coincident and connected in fluid communication with the outer cavity 130. The gas apertures 134 may be circumferentially and radially distributed on the endwall 126 to facilitate even distribution of gas flow into the outer cavity 130 through the gas apertures 134.

The inlet body 96 extends (e.g., axially extends) between and to a first axial end 136 of the inlet body 96 and a second axial end 138 of the inlet body 96. The inlet body 96 extends (e.g., radially extends) between and to an outer radial end 140 of the inlet body 96 and an inner radial end 142 of the inlet body 96. The inlet body 96 extends circumferentially about (e.g., completely around) the axial centerline 88. The first axial end 136 is mounted to or otherwise disposed at (e.g., on, adjacent, or proximate) the second axial end 118. The inner radial end 142 further forms the inner cavity 132. The inlet body 96 forms an inlet cavity 144 and one or more gas inlet ports 146. The inlet cavity 144 extends circumferentially about (e.g., completely around) the axial centerline 88 through the inlet body 96. The inlet cavity 144 is disposed on and extends through the first axial end 136. The inlet cavity 144 is disposed coincident with the gas apertures 134 such that the gas apertures 134 connect the inlet cavity 144 in fluid communication with the outer cavity 130. The gas inlet port(s) 146 facilitates fluid interconnection between the gas source 72 and the inlet cavity 144. For example, the gas inlet port(s) 146 may extend between and to the outer radial end 140 and the inlet cavity 144. The gas inlet port(s) 146 may be configured for fluid coupling with the gas source 72, for example, by a suitable fluid conduit (e.g., hose, tube, pipe, etc.).

The pintle 80 is disposed within the inner cavity 132. The pintle 80 extends on and along the axial centerline 88 between and to a first axial end 148 of the pintle 80 and a second axial end 150 of the pintle 80. The first axial end 148 is disposed at (e.g., on, adjacent, or proximate) the nozzle outlet passage 104. The second axial end 150 is disposed on the flexure disk 82. The pintle 80 includes a pintle shaft 152 and a pintle head 154. The pintle shaft 152 extends (e.g., axially extends) between and to the second axial end 150 and the pintle head 154. The pintle head 154 extends (e.g., axially extends) between and to the pintle shaft 152 and the first axial end 148. The pintle head 154 forms a radially-enlarged portion of the pintle 80 (e.g., relative to the pintle shaft 152). The pintle head 154 includes an outer diameter edge 156 and a tip 158. The outer diameter edge 156 extends circumferentially about (e.g., completely around) the axial centerline 88. The outer diameter edge 156 is disposed proximate the inner wall 124. The outer diameter edge 156 may form a gap 160 (e.g., a small, annular gap) between the outer diameter edge 156 and the inner wall 124. For example, the outer diameter edge 156 may be disposed proximate the first axial end 116 and the inner radial end 122 to form the gap 160 between the outer diameter edge 156 and the inner wall 124. The gap 160 may facilitate leakage of a small amount of gas from the outer cavity 130 into the inner cavity 132 through the gap 160. Alternatively, the outer diameter edge 156 may contact the inner wall 124 (e.g., the inner wall 124 may guide axial movement of the pintle 80). The tip 158 is disposed on the first axial end 148. The pintle head 154 may form a conical outer surface 161 at (e.g., on, adjacent, or proximate) the tip 158. The pintle head 154 is positioned relative to the nozzle body 92 to form a gas flow control gap 162 between the pintle head 154 and the nozzle body 92. In particular, the gas flow control gap 162 may be formed between the pintle head 154 and the endwall 106. The gas flow control gap 162 is disposed between the outer cavity 130 and the nozzle outlet passage 104 to facilitate control of gas flow into and through the nozzle outlet passage 104 from the outer cavity 130. The pintle 80 is configured to move (e.g., oscillate and/or translate) along the axial centerline 88 to vary a size of the gas flow control gap 162.

The flexure disk 82 is disposed (e.g., sandwiched) between the inlet body 96 (e.g., at the second axial end 138) and the actuator housing 86. The flexure disk 82 further forms the inner cavity 132 along the second axial end 138. The flexure disk 82 extends (e.g., axially extends) between and to a first axial side 164 of the flexure disk 82 and a second axial side 166 of the flexure disk 82. The first axial side 164 is disposed on the pintle 80 (e.g., the second axial end 150). The second axial side 166 is disposed on the piezoelectric actuator 84. The flexure disk 82 of FIG. 4 is an imperforate disk (e.g., between the first axial side 164 and the second axial side 166), however, the flexure disk 82 may alternatively be configured as a perforated (e.g., mesh) disk, as will be discussed in further detail.

The piezoelectric actuator 84 is disposed at (e.g., on, adjacent, or proximate) the axial centerline 88. The piezoelectric actuator 84 includes a distal end 168 disposed on the flexure disk 82 (e.g., the second axial side 166). The piezoelectric actuator 84 (e.g., the distal end 168) is coupled with the pintle 80 (e.g., the second axial end 150). For example, the piezoelectric actuator 84 may be coupled with the pintle 80 by and through the flexure disk 82. In some embodiments, the piezoelectric actuator 84 may be directly connected to the pintle 80, for example, by a mechanical fastener, an attachment interface (e.g., a threaded interface, a ball-and-socket interface, etc.), or another suitable mechanical connection extending through the flexure disk 82. The piezoelectric actuator 84 may be piezoelectric stack actuator or other piezoelectric transducer arrangement configured to drive movement (e.g., oscillation) of the pintle 80 to vary the size of the gas flow control gap 162. The piezoelectric actuator 84 is electrically connected to the controller 66 to receive an electric control input (e.g., an AC electrical current) therefrom.

The actuator housing 86 is mounted to or otherwise disposed at (e.g., on, adjacent, or proximate) the nozzle housing 78. For example, the actuator housing 86 may include an axial end 170 mounted to the inlet body 96 on the second axial end 138. The actuator housing 86 forms and circumscribes an actuator cavity 172 between the actuator housing 86 and the piezoelectric actuator 84. The flexure disk 82 further forms the actuator cavity 172. The flexure disk 82 may separate (e.g., seal) the inner cavity 132 from the actuator cavity 172.

In operation of the aeromechanical damping measurement system 58, the piezoelectric actuator 84 is configured to move (e.g., oscillate) the pintle 80, which movement of the pintle 80 facilitates a variation of the gas flow control gap 162 size to vary and control a mass flow rate of a pressurized gas along a gas flow path 174 through the gas injection nozzle 64. The pressurized gas may flow along the gas flow path 174 from the gas source 72, into the inlet cavity 144, through the gas apertures 134, through the outer cavity 130, through the gas flow control gap 162, through the nozzle outlet passage 104, and may be discharged from the gas injection nozzle 64 at the passage outlet 110. As previously discussed, at least a portion of the pressurized gas may also flow from the outer cavity 130 into the inner cavity 132 through the gap 160. The mass flow rate of the pressurized gas directed into the nozzle outlet passage 104 may be oscillatory or steady as a result of the operation of the piezoelectric actuator 84 to control movement of the pintle 80. In other words, the mass flow rate of the pressurized gas may oscillate according to a displacement frequency of the piezoelectric actuator 84. The maximum and minimum mass flow rates of the pressurized gas during oscillation may be set by a median position of the pintle 80 as well as a stroke length of the pintle 80 at a set operating frequency for control of the piezoelectric actuator 84 (e.g., controlled by the controller 66). The pintle 80, oscillated by operation of the piezoelectric actuator 84, may have an operating frequency above (e.g., well above) 500 hertz (Hz). The operating frequency of the pintle 80, for example, may be greater than one kilohertz (1 kHz), or up to or even greater than two kilohertz (2 kHz). Discrete and/or oscillatory positioning of the pintle 80 may also facilitate constant or oscillatory flow adjustment via pintle 80 position (e.g., axial position) within the gas injection nozzle 64, stroke length of the piezoelectric actuator 84, position (e.g., axial position) of the piezoelectric actuator 84, and/or by changing an inlet pressure of the pressurized gas supplied to the gas injection nozzle 64.

In operation of the gas injection nozzle 64, the inner cavity 132 may be pressurized (e.g., relative to an ambient pressure surrounding the gas injection nozzle 64). For example, the flow of the pressurized gas into the inner cavity 132 through the gap 160 may pressurize the inner cavity 132 to a level greater than an ambient pressure surrounding the gas injection nozzle 64 but less than a pressure of the outer cavity 130. This partial pressurization of the inner cavity 132 may reduce a compressive force on the pintle 80 to facilitate a larger motion amplitude and higher operating frequency of the pintle 80. The partial pressurization of the inner cavity 132 may prevent significant pressure from building on an underside of the pintle which can otherwise risk placing the piezoelectric actuator 84 in tension, therein increasing a risk of piezoelectric actuator 84 failure. This backside pressure buildup reduces the pressure ratio between the top and the bottom of the pintle 80, reducing the compressive load on the piezoelectric actuator 84.

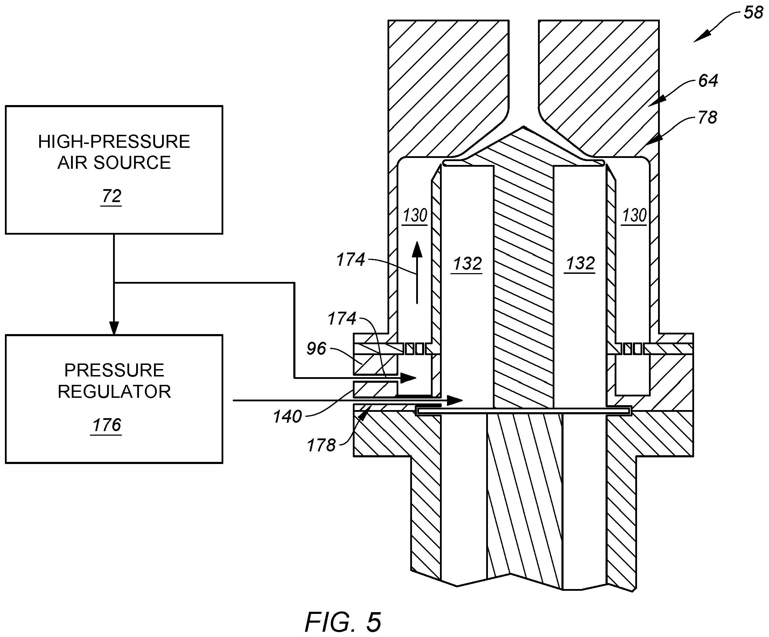

FIG. 5 schematically illustrates another embodiment of the aeromechanical damping measurement system 58 and its gas injection nozzle 64. The aeromechanical damping measurement system 58 of FIG. 5 includes a pressure regulator 176 connected in fluid communication with and between the gas source 72 and the inner cavity 132. For example, the pressure regulator 176 may be connected in fluid communication with the inner cavity 132 by a gas inlet port 178 formed by the inlet body 96. The gas inlet port 178 may extend through the inlet body 96 between and to the outer radial end 140 and the inner cavity 132. The gas inlet port(s) 146 may be configured for fluid coupling with the pressure regulator 176, for example, by a suitable fluid conduit (e.g., hose, tube, pipe, etc.). The pressure regulator 176 is configured to direct a pressurized gas from the gas source 72 to the inner cavity 132 at a reduced pressure relative to the pressurized gas directed to the outer cavity 130 along the gas flow path 174 (see FIG. 4). The pressure regulator 176 may thereby facilitate fine control of inner cavity 132 pressure.

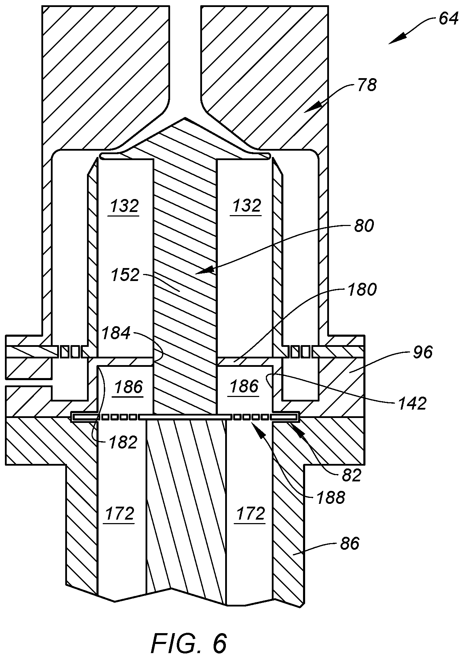

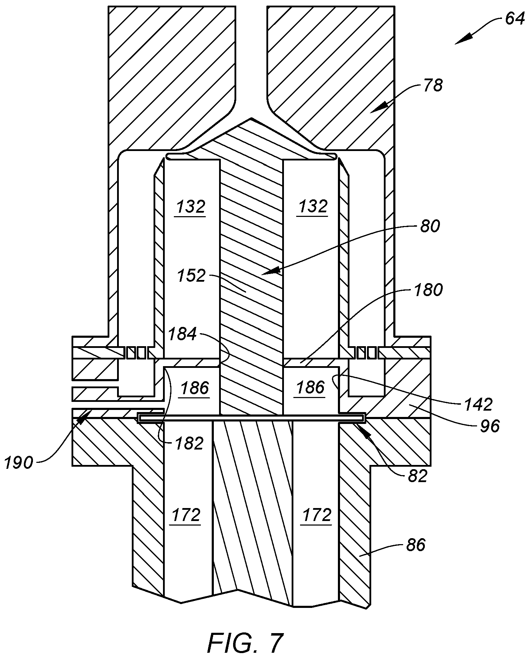

FIGS. 6 and 7 illustrate cutaway, side views of other embodiments of the gas injection nozzle 64. The nozzle housing 78 of FIGS. 6 and 7 forms a barrier wall 180 (e.g., an imperforate, air or other gas impermeable barrier). For example, as shown in FIGS. 6 and 7, the barrier wall 180 may be formed by or otherwise connected to the inlet body 96. The barrier wall 180 may be disposed between (e.g., axially between) and separating the inner cavity 132 and the flexure disk 82. The barrier wall 180 extends (e.g., radially extends) between and to an outer end 182 of the barrier wall 180 and an inner end 184 of the barrier wall 180. The outer end 182 may be disposed at (e.g., on, adjacent, or proximate) the inner radial end 142. The inner end 184 may be disposed at (e.g., on, adjacent, or proximate) the pintle 80 (e.g., the pintle shaft 152). For example, the inner end 184 may have a tight slip fit on the pintle shaft 152, thereby ensuring the gas pressure of the inner cavity 132 is not applied to the flexure disk 82. The barrier wall 180 may alternatively be formed by or otherwise mounted on the pintle 80 (e.g., the pintle shaft 152) and may extend outward (e.g., radially outward) and contact the nozzle housing 78. For example, the barrier wall 180 may be formed by an O-ring mounted on the pintle shaft 152. The barrier wall 180 may form a disk cavity 186 (e.g., an annular cavity) with the nozzle housing 78 (e.g., the inlet body 96), the pintle 80 (e.g., the pintle shaft 152), and the flexure disk 82. The barrier wall 180 may isolate the flexure disk 82 and the disk cavity 186 from fluid communication with the inner cavity 132.

In some embodiments, and as shown in FIG. 6 for example, the flexure disk 82 may form a plurality of apertures 188 extending through the flexure disk 82 between the first axial side 164 and the second axial side 166. The apertures 188 may facilitate equalization of pressure across the flexure disk 82 such that a pressure in the disk cavity 186 is the same as or substantially the same as a pressure within the actuator cavity 172. In some embodiments, the actuator cavity 172 may additionally be vented to an exterior of the gas injection nozzle 64, for example, through the actuator housing 86.

In some embodiments, and as shown in FIG. 7 for example, the disk cavity 186 may be vented to an exterior of the gas injection nozzle 64 through the nozzle housing 78. The nozzle housing 78 (the inlet body 96) may form one or more vent ports 190 extending through the nozzle housing 78 from the disk cavity 186 to an exterior of the gas injection nozzle 64. In some embodiments, the actuator cavity 172 may additionally be vented to an exterior of the gas injection nozzle 64, for example, through the actuator housing 86.

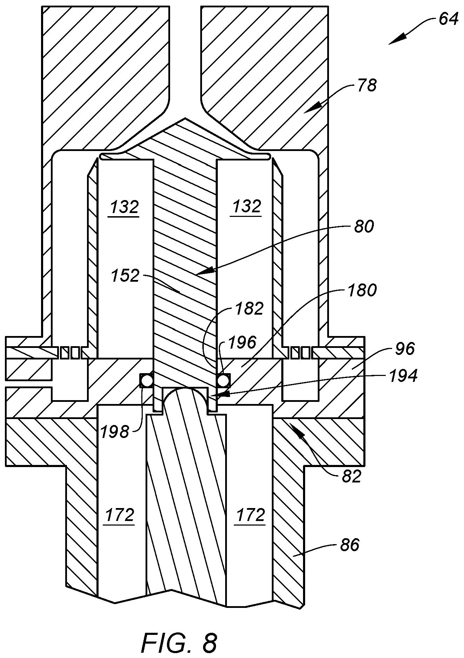

Referring to FIG. 8, in some embodiments of the gas injection nozzle 64, the piezoelectric actuator 84 may be directly coupled with the pintle 80. The piezoelectric actuator 84 of FIG. 8 is mounted to the pintle 80 at a ball-and-socket interface 194 formed by and between the piezoelectric actuator 84 and the pintle 80. Of course, the present disclosure is not limited to the particular interface 194 of FIG. 8 for directly coupling the piezoelectric actuator 84 to the pintle 80. The gas injection nozzle 64 of FIG. 8 includes the barrier wall 180 with the outer end 182 disposed at (e.g., on, adjacent, or proximate) the pintle 80 (e.g., the pintle shaft 152). The gas injection nozzle 64 of FIG. 8 further includes a resilient seal 196 (e.g., an O-ring) disposed between and contacting the barrier wall 180 and the pintle shaft 152. The barrier wall 180 of FIG. 8 forms a seal groove 198 for the resilient seal 196 on the outer end 182, however, the seal groove 198 may alternatively be formed by the pintle 80. The resilient seal 196 facilitates fluid sealing between the inner cavity 132 and the actuator cavity 172. With the piezoelectric actuator 84 directly coupled with the pintle 80 and the barrier wall 180 and the resilient seal 196 isolating the inner cavity 132 from fluid communication with the actuator cavity 172, the gas injection nozzle 64 of FIG. 8 may not include the flexure disk 82.

Referring again to FIGS. 2 and 4, in operation, the aeromechanical damping measurement system 58 may be used during a gas turbine engine testing and design phases to identify aeromechanical damping characteristics of gas turbine engine components. For example, the aeromechanical damping measurement system 58 may induce vibratory responses in the component 60 (e.g., one or more fan blades of the bladed fan rotor 52; see FIG. 1). The mass flow rate of the pressurized gas directed toward and onto the component 60 may be oscillatory or steady as a result of the operation of the piezoelectric actuator 84 to control movement of the pintle 80. For example, the controller 66 may control the signal generator 77 to generate and direct a constant (e.g., direct current (DC)) or an oscillatory alternating current (AC) signal (e.g., a sinusoidal driving signal) to the piezoelectric actuator 84 to control a position and/or movement (e.g., oscillation) of the pintle 80, thereby controlling a flow rate and/or oscillation of a pressurized gas stream 192 directed from the gas injection nozzle 64 to the component 60. As discussed above, the position and movement of the pintle 80 within the gas injection nozzle 64 controls a size of the gas flow control gap 162, thereby controlling the flow rate and/or oscillation of the pressurized gas stream 192. Accordingly, the aeromechanical damping measurement system 58 may facilitate oscillation of the pressurized gas stream 192 at an operating frequency above (e.g., well above) 500 hertz (Hz, for example, greater than one kilohertz (1 kHz) or up to or even greater than two kilohertz (2 kHz), with sufficient mass flow rates to induce a suitable vibratory response in the component 60. Moreover, the steady or oscillatory pressurized gas stream 192 may be controlled by modifying the pintle 80 position, the pintle 80 stroke length, the piezoelectric actuator 84 position (e.g., in response to the driving current), and the gas pressure from the gas source 72, without the need to disassemble or physically access the gas injection nozzle 64 installed within the gas turbine engine 20. The controller 66 is configured to determine damping characteristics of an aeromechanical mode of the component 60 based on the structural response induced by the gas injection nozzle 64 and measured by the position sensor 62.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A gas injection nozzle (64) for an aeromechanical damping measurement system (58), the gas injection nozzle (64) comprising:
a nozzle housing (78) extending along an axis (88), the nozzle housing (78) includes an inner wall (124), an outer wall (105), and a first axial endwall (106), the inner wall (124) and the outer wall (105) extend circumferentially about the axis (88), the inner wall (124) and the outer wall (105) form an outer cavity (130) radially between the inner wall (124) and the outer wall (105), the inner wall (124) forms an inner cavity (132) radially within the inner wall (124), the nozzle housing (78) further forms a nozzle outlet passage (104) through the first axial endwall (106) along the axis (88), the nozzle outlet passage (104) is connected in fluid communication with the outer cavity (130) by a gas flow control gap (162) at the first axial endwall (106);
a pintle (80) extending along the axis (88) within the inner cavity (132), the pintle (80) further forms the gas flow control gap (162), the pintle (80) is axially movable between a first position and a second position to vary a size of the gas flow control gap (162); and
a piezoelectric actuator (84) coupled with the pintle (80), and the piezoelectric actuator (84) is configured to move the pintle (80) between the first position and the second position.

2. The gas injection nozzle of claim 1, wherein the piezoelectric actuator (84) is configured to move the pintle (80) between the first position and the second position at a frequency greater than 500 hertz.

3. The gas injection nozzle of claim 1 or 2, wherein
the inner wall (124) circumscribes and is radially spaced from the pintle (80); and
the outer wall (105) circumscribes and is radially spaced from the inner wall (124).

4. The gas injection nozzle of any preceding claim, further comprising a flexure disk (82) disposed between and contacting the pintle (80) and the piezoelectric actuator (84), and the flexure disk (82) further forms the inner cavity (132), optionally wherein, either: the flexure disk (82) is imperforate; or wherein the flexure disk (82) forms a plurality of apertures (188) extending through the flexure disk (82).

5. The gas injection nozzle of any of claims 1 to 3, further comprising a flexure disk (82) disposed between and contacting the pintle (80) and the piezoelectric actuator (84), wherein the nozzle housing (78) further includes a barrier wall (180) axially between the first axial endwall (106) and the flexure disk (82), and the barrier wall (180) is configured with a slip fit around a shaft (152) of the pintle (80), optionally wherein the barrier wall (180) isolates the flexure disk (82) from fluid communication with the inner cavity (132).

6. The gas injection nozzle of claim 5, wherein the barrier wall (180) extends between and to the inner wall (124) and the pintle (80).

7. The gas injection nozzle of claim 5 or 6, wherein the barrier wall (180) forms a disk cavity (186) axially between the barrier wall (180) and the flexure disk (82), and the disk cavity (186) is vented to an exterior of the gas injection nozzle (64).

8. The gas injection nozzle of any preceding claim, wherein the nozzle housing (78) further includes a second axial endwall (126) forming the outer cavity (130) opposite the first axial endwall (106), the nozzle housing (78) forms an inlet cavity (144), and the second axial endwall (106) forms a plurality of apertures (134) connecting the outer cavity (130) and the inlet cavity (144) in fluid communication.

9. The gas injection nozzle of any preceding claim, wherein the inner cavity (132) is connected in fluid communication with the outer cavity (130) by a gap (160) formed between the pintle (80) and the inner wall (124) .

10. An aeromechanical damping measurement system (58) comprising:
a gas injection nozzle (64) including a nozzle housing (78), a pintle (80), and a piezoelectric actuator (84),
the nozzle housing (78) extends along an axis (88), the nozzle housing (78) includes an inner wall (124) and an outer wall (105), the inner wall (124) and the outer wall (105) extend circumferentially about the axis (88), the inner wall (124) and the outer wall (105) form an outer cavity (130), the inner wall (124) forms an inner cavity (132) radially within the inner wall (124), the nozzle housing (78) further forms a nozzle outlet passage (104), the nozzle outlet passage (104) is connected in fluid communication with the outer cavity (130) by a gas flow control gap (162);
the pintle (80) is disposed within the inner cavity (132), the pintle (80) further forms the gas flow control gap (162), the pintle (80) is axially movable between a first position and a second position to vary a size of the gas flow control gap (162), and
the piezoelectric actuator (84) is coupled with the pintle (80), and the piezoelectric actuator (84) is configured to move the pintle (80) between the first position and the second position;
a gas source (72) connected in fluid communication with the outer cavity (130), and the gas source (72) is configured to direct a pressurized gas into the outer cavity (130); and
a controller (66) electrically connected to the piezoelectric actuator (84), and the controller (66) is configured to direct a control current to the piezoelectric actuator (84) to control the piezoelectric actuator (84) to position the pintle (80) in the first position or the second position.

11. The aeromechanical damping measurement system of claim 10, wherein:
the inner cavity (132) is connected in fluid communication with the outer cavity (130) by a gap (160) formed between the pintle (80) and the inner wall (124); and/or
wherein the gas source (72) is connected in fluid communication with the inner cavity (132) by a pressure regulator (176), and the pressure regulator (176) is configured to pressurize the inner cavity (132) at a reduced pressure relative to the outer cavity (130).

12. The aeromechanical damping measurement system of claim 10 or 11, wherein the controller (66) includes a processor (74) connected in signal communication with a non-transitory memory (76) storing instructions which, when executed by the processor (74), cause the controller (66) to:
control the control current directed to the piezoelectric actuator (84) to move the pintle (80) between the first position and the second position at a frequency greater than 500 hertz.

13. The aeromechanical damping measurement system of any of claims 10 to 12, further comprising at least one position sensor (62) connected in signal communication with the controller (66), wherein the controller (66) includes a or the processor (74) connected in signal communication with a or the non-transitory memory (76) storing instructions which, when executed by the processor (74), cause the controller (66) to:
control the control current directed to the piezoelectric actuator (84) to move the pintle (80) to control the size of the gas flow control gap (162) and direct a pressurized gas stream (192) into a component (60); and
measure a vibration of the component (60) in response to the pressurized gas stream (192) with the at least one position sensor (62), optionally wherein controlling the control current directed to the piezoelectric actuator (84) to move the pintle (80) to control the size of the gas flow control gap (162) includes controlling the control current directed to the piezoelectric actuator (84) to move the pintle (80) between the first position and the second position at a frequency greater than 500 hertz.

14. The aeromechanical damping measurement system of any of claims 10 to 13, wherein the gas injection nozzle (64) further includes a flexure disk (82) disposed between and contacting the pintle (80) and the piezoelectric actuator (84), and the flexure disk (82) further forms the inner cavity (132).

15. The aeromechanical damping measurement system of any of claims 10 to 14, wherein the gas injection nozzle (64) further includes a flexure disk (82) disposed between and contacting the pintle (80) and the piezoelectric actuator (84), the nozzle housing (78) further includes a barrier wall (180) axially between a first axial end wall (106) of the nozzle housing (78) and the flexure disk (82), the barrier wall (180) isolates the flexure disk (82) from fluid communication with the inner cavity (132), and the flexure disk (82) forms a plurality of apertures (188) extending through the flexure disk (82).
